# EUROPEAN PATENT APPLICATION

(11) **EP 4 459 742 A1**
(43) Date of publication of application: **06.11.2024**
(21) Application number: 21969699.4
(22) Date of filing: 31.12.2021
(51) Int. Cl.: H01M 10/613

(54) **BATTERY MODULE AND BATTERY PACK**

(71) Applicant: AESC Dynamics Technology (Jiangsu) Ltd., 214443 Wuxi City, Jiangsu Province (CN); AESC Intelligent Innovation Dynamics Technology (Shanghai) Ltd., Shanghai 201315 (CN)
(72) Inventor: CHEN, Zhuolie, Shanghai 200120 (CN); CUI, Xin, Shanghai 200120 (CN); HE, Yafei, Shanghai 200120 (CN)
(74) Representative: Becker, Eberhard
(86) International application number: PCT/CN2021/143663
(87) International publication number: WO 2023/123348

(57) **Abstract**

The present application relates to the technical field of power batteries, and in particular to a battery module and a battery pack. The battery module comprises an outer frame and a plurality of battery cells, wherein the plurality of battery cells are stacked to form a battery cell assembly; and the outer frame comprises a bottom plate, a top cover and an outer surrounding plate, the bottom plate and the top cover are respectively arranged at the bottom and the top of the outer surrounding plate, the outer surrounding plate comprises two opposite side plates and two opposite end plates, the two end plates are spaced apart from each other in a length direction of the side plate, the two end plates, the two side plates, the bottom plate and the top cover jointly enclose an accommodating cavity in which the battery cell assembly is arranged, and the top cover is provided with a heat dissipation hole.

## Description

### BACKGROUND

### Technical Field

The disclosure relates to the technical field of power batteries, for example, relates to a battery module and a battery pack.

### Description of Related Art

As the emphasis on environmental protection grows day by day, new energy electric vehicles are becoming increasingly popular. The energy density of battery packs is related to the cruising range of electric vehicles. In order to satisfy the needs for high energy, a large number of secondary batteries are combined in series and parallel in the currently-available battery packs. As the energy density of battery packs increase, the problem of thermal safety of the battery packs becomes more and more serious. The safety of battery packs directly affects the safety of electric vehicles and passengers, so the safety problem of battery packs has become an obstacle to the popularization of electric vehicles.

In the related art, after thermal runaway occurs in a battery module with a compact lateral space, the heat may not be easily dissipated from the box. Therefore, how to effectively solve the safety problem of the battery packs is a technical problem that needs to be urgently solved.

### SUMMARY

The disclosure provides a battery module and a battery pack in which heat generated by runaway may be dissipated from a box of the battery module with a compact lateral space.

The following technical solutions are adopted by the disclosure:

A battery module including a plurality of cells and an outer frame is provided. The plurality of cells are stacked to form a cell assembly. The outer frame includes a bottom plate, a top cover, and an outer surrounding plate, wherein the bottom plate and the top cover are respectively disposed at a bottom portion and a top portion of the outer surrounding plate. The outer surrounding plate includes two opposite side plates and two opposite end plates, wherein the two end plates are arranged at intervals in a length direction of the side plates. The two end plates, the two side plates, the bottom plate, and the top cover surround and form an accommodating cavity together. The cell assembly is disposed in the accommodating cavity, and the top cover is provided with heat dissipation holes.

The disclosure further provides a battery pack including the battery module.

### BRIEF DESCRIPTION OF THE DRAWINGS

FIG. 1 is a schematic structural view of a battery module according to embodiment one of the disclosure.
FIG. 2 is a schematic exploded view of the battery module according to embodiment one of the disclosure.
FIG. 3 is a schematic structural view of a battery module according to embodiment two of the disclosure.
FIG. 4 is a schematic exploded view of the battery module according to embodiment two of the disclosure.

In the figures: 1: outer frame, 11: top cover, 111: heat dissipation hole, 12: end plate, 121: end discharge hole, 13: side plate, 2: sealing and fireproof pad, 21: fireproof pad discharge hole, 3: output terminal accommodating hole, 4: tab bracket, 41: bracket discharge hole, and 5: output terminal.

### DESCRIPTION OF THE EMBODIMENTS

The disclosure is described in detail through the accompanying figures together with the embodiments.

In the description of the disclosure, unless clearly specified and defined otherwise, the terms "connected", "connecting", "fixed" should be understood in a broad sense, for instance, it can be a fixed connection, a detachable connection, or an integral connection, it can be a mechanical connection or an electrical connection, it can be a direct connection or an indirect connection through an intermediate medium, and it can be an internal communication between two components or an interaction relationship between two components. For a person having ordinary skill in the art, the specific meaning of the abovementioned terms in the disclosure can be understood according to specific circumstances.

In the disclosure, unless otherwise clearly specified and defined, the first feature being "above" or "below" the second feature may include direct contact between the first and second features or may include the first and second features not being in direct contact but being in contact through other features between them. Further, the first feature being "on", "above", and "upon" the second feature include that the first feature is directly above and obliquely above the second feature, or it may simply mean that the first feature is higher in level than the second feature. The first feature being "under", "below", and "beneath" the second feature include that the first feature is directly below and obliquely below the second feature, or it may simply mean that the first feature is lower in level than the second feature.

In the description of the embodiments, the terms "up", "down", "right", and other orientations or positional relationships are based on the orientations and positional relationships shown in the drawings, are provided to facilitate the description and operation, and are not intended to indicate or imply that the indicated device or element must have a specific orientation or be constructed and operated in a specific orientation, so cannot be understood as limiting the disclosure. In addition, the terms "first" and "second" are only used for distinction in description and have no special meaning.

In the related art, when the internal space of a battery module is laterally compact, after thermal runaway occurs inside the cells, the heat generated by the cells may not be discharged easily, which increases the overall risk of the battery module. This embodiment thereby provides a battery pack in which hot air may be effectively discharged to the outside of a box of the battery module in time. The battery pack includes a battery module, and in the battery module, the hot air may be discharged in time, so that the high-temperature smoke is able to be quickly released from the inside, and the heat spread may be delayed.

### Embodiment One

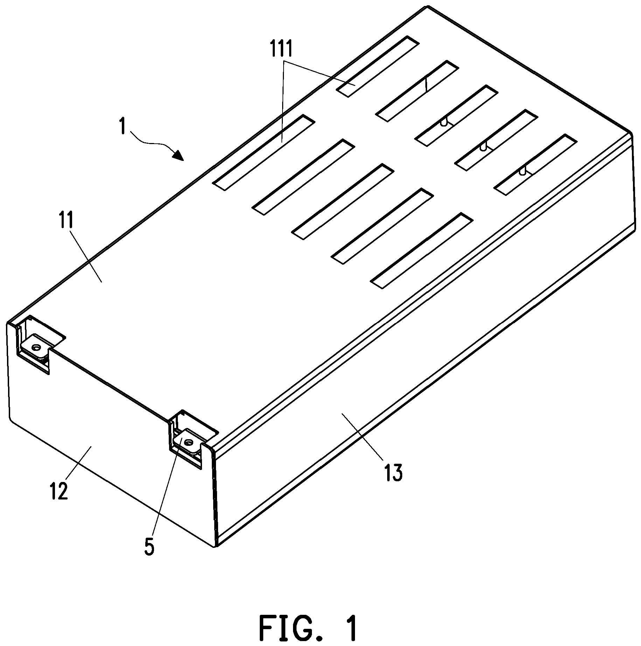

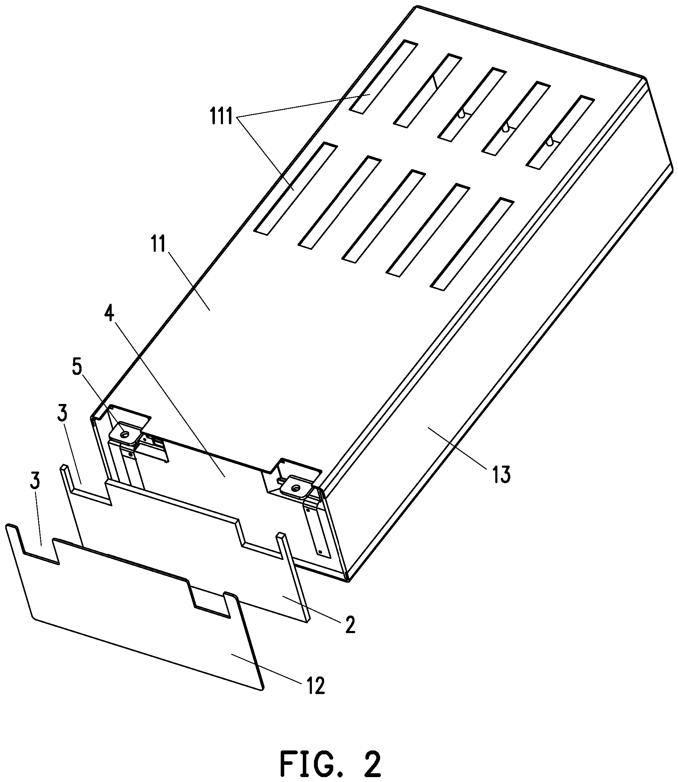

As shown in FIG. 1 and FIG. 2, the battery module includes an outer frame 1, a tab bracket 4, a busbar, and a plurality of cells. The plurality of cells are stacked to form a cell assembly, and the cells are connected in series or in parallel through tabs. The outer frame 1 includes a bottom plate, a top cover 11, and an outer surrounding plate. The bottom plate and the top cover 11 are respectively arranged at a bottom portion and a top portion of the outer surrounding plate. The outer surrounding plate includes two opposite side plates 13 and two opposite end plates 12, and the two end plates 12 are arranged at intervals in a length direction of the side plates 13. The two end plates 12, the two side plates 13, the bottom plate, and the top cover 11 surround and form an accommodating cavity together, and the cell assembly is disposed in the accommodating cavity. The top cover 11 is provided with heat dissipation holes 111. Both the tab bracket 4 and the busbar are disposed between the cell assembly and the end plate 12, and the tab bracket 4 is disposed between the cell assembly and the busbar. The tabs of the cells protrude from the tab bracket 4 and are connected to the busbar. Two output terminals 5 are disposed at the same end of the cell assembly. The output terminals 5 are connected to the busbar, and the busbar is disposed to connect the cells and the output terminals 5, so electric energy may be outputted.

When thermal runaway occurs in a cell and high-temperature smoke is generated, since the top cover 11 is provided with the heat dissipation holes 111, the heat dissipation holes 111 located on the top cover 11 can quickly lead out the high-temperature smoke generated by the thermal runaway, and other cells are prevented from being affected by the high-temperature smoke. The heat dissipation holes 111 are the main discharge path, which can discharge a large amount of high-temperature smoke from the top cover 11. By arranging the heat dissipation holes 111 on the top cover 11, the high-temperature smoke generated by the battery module with a compact lateral space may be effectively discharged out of a box quickly, and the risk of the battery module is thereby reduced.

Optionally, the output terminals 5 are disposed at one end of the cell assembly in this embodiment. It can be understood that one end of the cell assembly is provided with two output terminals 5, the heat dissipation holes 111 include first heat dissipation holes, and one end of the top cover 11 away from the output terminals 5 is provided with the plurality of first heat dissipation holes. The arrangement of the first heat dissipation holes may guide the high-temperature smoke to be emitted mainly not from the vicinity of the output terminals, so as to prevent a high-voltage component at the same end of the output terminals 5 from being affected, so that the risk of thermal runaway of the battery module is reduced.

Optionally, in this embodiment, the heat dissipation holes further include second heat dissipation holes (not shown in FIG. 1 and FIG. 2) and third heat dissipation holes. Two ends of the top cover 11 are provided with the plurality of second heat dissipation holes, and a middle portion of the top cover 11 is provided with the plurality of the third heat dissipation holes. The plurality of second heat dissipation holes and the plurality of third heat dissipation holes can dissipate high-temperature smoke out of the outer frame 1 as soon as possible. In this embodiment, the end plates 12 are only provided with through holes for the output terminals 5 and a low-voltage component to pass through, and there are no heat dissipation holes 111 on the two end plates 12, so the high-temperature smoke generated during thermal runaway is prevented from flowing to both sides of the module, and that the output terminals 5 and other structures are prevented from being affected.

The first heat dissipation holes are disposed between the second heat dissipation holes and the third heat dissipation holes, and a distance between the first heat dissipation holes and the second heat dissipation holes adjacent to the first heat dissipation holes is less than a distance between the first heat dissipation holes and the third heat dissipation holes. The first heat dissipation holes are disposed close to the second heat dissipation holes, so the high-temperature smoke may be well guided. Therefore, the high-temperature smoke is kept away from the output terminals 5, and the high-voltage component at the same end of the output terminals 5 is prevented from being affected by the high-temperature smoke.

Optionally, at least part of the heat dissipation holes 111 are elongated holes in this embodiment, and a length direction of the heat dissipation holes 111 that are elongated holes is consistent with a length direction of the cells. The arrangement of the elongated holes is beneficial to processing, and further, the elongated holes has a larger hole area compared to the circular discharge holes, so the high-temperature smoke may be discharged in time. In the embodiments of the disclosure, the length direction of the third heat dissipation holes and the first heat dissipation holes is consistent with the length direction of the cells, so that the high-temperature smoke may be discharged as soon as possible in the length direction of the cells, and the high-temperature smoke is also be prevented from gathering in the length direction of the cells. There are multiple third heat dissipation holes and first heat dissipation holes, and the third heat dissipation holes and the first heat dissipation holes are arranged in rows.

Optionally, as shown in FIG. 2, the battery module further includes a sealing and fireproof pad 2, and the sealing and fireproof pad 2 is disposed between the cells and the end plate 12. The sealing and fireproof pad 2 is disposed between the end plate 12 and the cell assembly, for example, between the tab bracket 4 and the end plate 12. The sealing and fireproof pad 2 is made of silicon foam. A thickness of the sealing and fireproof pad 2 is greater than a distance between the tab bracket 4 and the end plate 12, so that high-temperature smoke is effectively prevented from entering between the tab bracket 4 and the end plate 12. In this way, the effect of sealing is achieved, and the problem of arcing and short circuit of the busbar is effectively prevented from occurring. Because the sealing and fireproof pad 2 is made of silicon foam, the sealing and fireproof pad 2 may be used to replace the conventional mica used for the end plates, and weight and costs are thereby lowered.

Optionally, in this embodiment, the sealing and fireproof pad 2 adjacent to the output terminals 5 is provided with an output terminal accommodating hole 3. Correspondingly, an output terminal accommodating hole 3 is also provided on the end plate 12, but the shapes of the output terminal accommodating holes 3 may be different, and the shapes may be set according to actual needs. The output terminal accommodating hole 3 may prevent the output terminal 5 from interfering and affecting the assembly during the assembly process of the end plate 12, and the assembly efficiency is thereby improved.

Optionally, in this embodiment, the sealing and fireproof pad 2 away from the output terminals 5 is provided with a low-voltage connection hole. Correspondingly, the end plate 12 away from the output terminals 5 may also be provided with a low-voltage connection hole, but the shapes of the low-voltage connection holes may be different, and the shapes may be set according to actual needs. The arrangement of the low-voltage connection hole is to prevent the low-voltage component from interfering with the end plate 12 during the assembly process of the box. Further, the output terminal accommodating hole 3 and the low-voltage connection hole may also lead out the high-temperature smoke after the high-temperature smoke is generated, and the effect of heat dissipation is thus achieved.

In this embodiment, the battery module is provided with the outer frame and the plurality of cells, and the plurality of cells are stacked to form the cell assembly. The outer frame includes the bottom plate, the top cover, and the outer surrounding plate. The bottom plate and the top cover are respectively disposed at the bottom portion and the top portion of the outer surrounding plate. The outer surrounding plate includes two opposite side plates and two opposite end plates, and the two end plates are arranged at intervals in the length direction of the side plates. The two end plates, the two side plates, the bottom plate, and the top cover surround and form the accommodating cavity together, and the cell assembly is disposed in the accommodating cavity. The top cover is provided with the heat dissipation holes. When thermal runaway occurs in a cell and high-temperature smoke is generated, since the top cover is provided with the heat dissipation holes, the heat dissipation holes can quickly lead out the high-temperature smoke generated by the thermal runaway, and other cells are prevented from being affected by the high-temperature smoke. The heat dissipation holes can discharge a large amount of high-temperature smoke from the top cover. By arranging the heat dissipation holes on the top cover, the high-temperature smoke generated by the battery module with a compact lateral space may be effectively discharged out of the box quickly, and the risk is thereby reduced.

### Embodiment Two

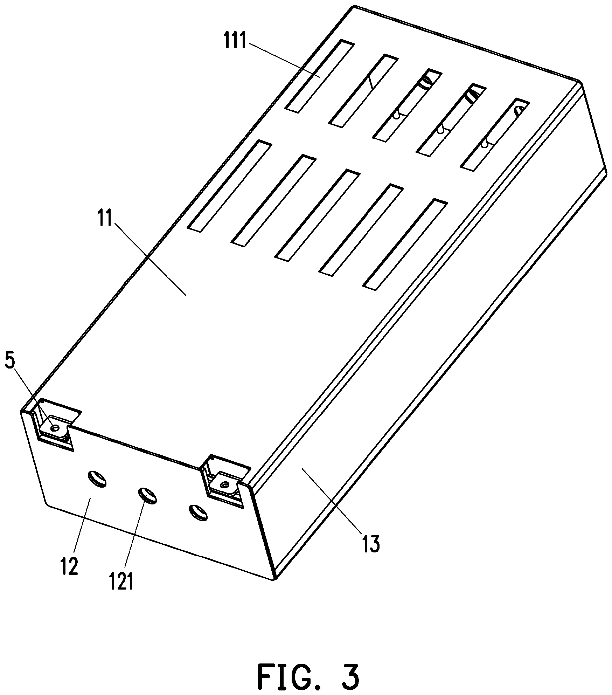

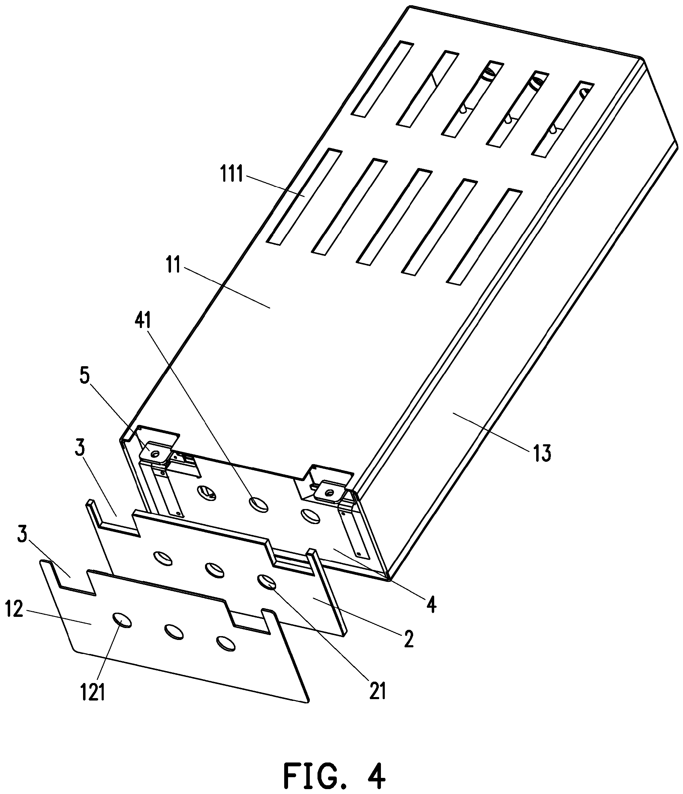

As shown in FIG. 3 and FIG. 4, a battery module includes a box having an accommodation cavity and a plurality of cells disposed in the box. The plurality of cells are stacked in series or in parallel to form a cell assembly, and the cell assembly is provided with the output terminal 5 to output electric energy. Optionally, the box includes a bottom plate, the top cover 11, the side plates 13, and the end plates 12. Each of the two sides of the bottom plate is provided with one side plate 13 and each of the two ends of the bottom plate is provided with one end plate 12, that is, the two ends of each end plate 12 are connected to the side plates 13, and the bottom plate, the top cover 11, the two side plates 13, and the two end plates 12 together form the accommodating cavity. An inner side wall of each of the side plates 13 is provided with a discharge channel, the top cover 11 is provided with the heat dissipation holes 111, and each of the end plates 12 is provided with an end discharge hole 121. By arranging the heat dissipation holes and the end discharge holes respectively on the top cover 11 and the end plates 12, the high-temperature smoke generated by the battery module with a compact lateral space and a compact vertical space may be effectively discharged out of the box quickly, and the risk is thereby reduced.

Optionally, in the embodiments of the disclosure, the heat dissipation holes 111 include second heat dissipation holes (not shown in FIG. 3 and FIG. 4) disposed at both ends of the top cover 11, first heat dissipation holes disposed at one end of the top cover 11 away from the output terminal 5, and third heat dissipation holes disposed one the middle portion of the top cover 11. The first heat dissipation holes are located between the third heat dissipation holes and the second heat dissipation holes, and the distance between the first heat dissipation holes and the second heat dissipation holes adjacent to the first heat dissipation holes is less than a distance between the first heat dissipation holes and a third discharge.

When thermal runaway occurs in a cell and high-temperature smoke is generated, the high-temperature smoke may be led to the end plates 12 through the discharge channels disposed at the side plates 13, and the end discharge holes 121 on end portions of the end plates 12 may discharge the high-temperature smoke in time. The top cover 11 is provided with the heat dissipation holes 111, and the heat dissipation holes 111 include the first heat dissipation holes, the second heat dissipation holes, and the third heat dissipation holes. The second heat dissipation holes disposed at both ends of the top cover 11 can quickly lead out the high-temperature smoke during thermal runaway, so as to prevent other cells from being affected. The first heat dissipation holes away from one end of the output terminal 5 may guide the high-temperature smoke to be emitted mainly not from the vicinity of the output terminal, so as to prevent the high-voltage component at one side of the output terminal 5 from being affected. The third heat dissipation holes are disposed at the middle portion of the top cover 11. The path from the cell where thermal runaway occurs to the third heat dissipation holes is the main discharge path, and the third heat dissipation holes can discharge a large amount of high-temperature smoke from the top cover 11.

At least the top cover 11 is made of a non-metallic material in this embodiment, and it can be understood that the whole box is made of a non-metallic material, or part of the box is made of a non-metallic material. By providing the first heat dissipation holes, the second heat dissipation holes, and the third heat dissipation holes on the top cover 11, the non-metallic top cover 11 is prevented from being melted by the high-temperature smoke, and the battery module as a whole is also prevented from failing.

Optionally, in this embodiment, as shown in FIG. 4, the battery module further includes the tab bracket 4 and the busbar. The tab bracket 4 is located inside the box (i.e., in the accommodating cavity) and between the end plates 12 and the cell assembly, and the busbar is located between the tab bracket 4 and the end plates 12. The tabs of the cells protrude from the tab bracket 4 and are connected to the busbar. The tab bracket 4 is provided with a plurality of bracket discharge holes 41, and the bracket discharge holes 41 are provided in one-to-one correspondence with a plurality of end discharge holes 31. The arrangement of the bracket discharge holes 41 may allow the high-temperature smoke to be discharged from the accommodating cavity of the box in time. One end of the cell assembly is provided with two output terminals 5, and the two output terminals 5 are provided at the same end of the cell assembly, so that the high-temperature smoke may be easily guided to the end without the output terminals 5 and to be discharged. The output terminals 5 are connected to the busbar, and the busbar is configured to connect the cells and the output terminals 5, so electric energy may be outputted.

Optionally, in this embodiment, as shown in FIG. 4, the battery module further includes the sealing and fireproof pad 2, and the sealing and fireproof pad 2 is disposed between the tab bracket 4 and the end plate 12. The sealing and fireproof pad 2 is made of silicon foam. The thickness of the sealing and fireproof pad 2 is greater than the distance between the tab bracket 4 and the end plate 12, so that high-temperature smoke is effectively prevented from entering between the tab bracket 4 and the end plate 12. In this way, the effect of sealing is achieved, and the problem of arcing and short circuit of the busbar is effectively prevented from occurring. Because the sealing and fireproof pad 2 is made of silicon foam, the sealing and fireproof pad 2 may be used to replace the conventional mica used for the end plates, and weight and costs are thereby lowered.

In order to allow the high-temperature smoke to flow out from the sealing and fireproof pad 2, the sealing and fireproof pad 2 is provided with fireproof pad discharge holes 21, and the plurality of fireproof pad discharge holes 21 are provided in one-to-one correspondence with the end discharge holes 31. The high-temperature smoke is discharged out of the accommodating cavity of the box through the bracket discharge holes 41, the fireproof pad discharge holes 21, and the end discharge holes 31 sequentially from the cells. The high-temperature smoke is thus prevented from gathering in the box, affecting other cells, and causing and accelerating thermal runaway.

In this embodiment, the end plates 12 include an output terminal end plate and a non-output terminal end plate. It can be understood that the output terminal end plate is disposed at the end of the cell assembly with the output terminals 5, and the non-output terminal end plate is located at the end of the cell assembly without the output terminals 5, that is, the output terminals 5 are located at one end of the cell assembly. In order to prevent the output terminals 5 from affecting the end plates during the box installation process, in this embodiment, output terminal accommodating holes 3 are provided on both the output terminal end plate and the sealing and fireproof pad 2 provided on the same side as the output terminal end plate. The output terminal accommodating hole 3 may prevent the output terminal 5 from interfering and affecting the assembly during the assembly process of the end plate 12, and the assembly efficiency is thereby improved. The cells are connected to the low-voltage component. The low-voltage component and the output terminals 5 are located at two ends of the cell component in this embodiment in this embodiment, so both the non-output terminal end plate and the sealing and fireproof pad 2 provided on the same side as the non-output terminal end plate are provided with the low-voltage connection holes. The arrangement of the low-voltage connection holes is to prevent the low-voltage component from interfering with the end plate during the assembly process of the box. Further, the output terminal accommodating hole 3 and the low-voltage connection holes may also lead out the high-temperature smoke after the high-temperature smoke is generated, and the effect of heat dissipation is thus achieved.

Optionally, in this embodiment, at least part of the heat dissipation holes 111 are elongated holes, and at least one type of the end discharge holes 121, the bracket discharge holes 41, and the fireproof pad discharge holes 21 is an elongated hole. When the heat dissipation holes 111 are elongated holes, lengths of the heat dissipation holes 111 all extend in the length direction of the cells. The end discharge holes 121, the bracket discharge hole 41, and the fireproof pad discharge holes 21 all extend in a height direction of the end plates 12. The arrangement of the elongated holes is beneficial to processing, and further, since the areas of the holes are large, the elongated holes has a larger hole area compared to the circular discharge holes, so the high-temperature smoke may be discharged in time.

In this embodiment, the battery module is provided with the outer frame and the plurality of cells, and the plurality of cells are stacked to form the cell assembly. The outer frame includes a bottom plate, a top cover, and an outer surrounding plate. The bottom plate and the top cover are respectively disposed at a bottom portion and a top portion of the outer surrounding plate. The outer surrounding plate includes two opposite side plates and two opposite end plates, and the two end plates are arranged at intervals in the length direction of the side plates. The bottom plate, top cover, two end plates, and the two side plates surround and form the accommodating cavity together, and the cell assembly is disposed in the accommodating cavity. The inner side wall of each of the side plates is provided with the discharge channel, the top cover is provided with the heat dissipation holes, and each of the end plates is provided with the end discharge hole.

The battery module provided by this embodiment includes the box (i.e., the outer frame) having the accommodating cavity and the plurality of cells disposed in the box. The plurality of cells are stacked to form the cell assembly, and the cell assembly is provided with the output terminal. The box includes the bottom plate, the top cover, the side plates, and the end plates. Each of the two sides of the bottom plate is provided with one side plate, and each of the two ends of the bottom plate is provided with one end plate. The bottom plate, top cover, two side plates, and the two end plates surround and form the accommodating cavity together. The inner side wall of each of the side plates is provided with the discharge channel, the top cover is provided with the heat dissipation holes, and each of the two end plates is provided with the end discharge hole. When thermal runaway occurs in a cell and high-temperature smoke is generated, the smoke may be led to the end plates through the discharge channels disposed at the side plates, and the end discharge holes on end portions of the end plates may discharge the high-temperature smoke in time. Since the top cover is provided with the heat dissipation holes, the high-temperature smoke generated by the thermal runaway may be quickly led out, and other cells are prevented from being affected. By arranging the heat dissipation holes and the end discharge holes respectively on the top cover and the end plates, the high-temperature smoke generated by the battery module with a compact lateral space and a compact vertical space may be effectively discharged out of the box quickly, and the risk is thereby reduced.

## Claims

1. A battery module, comprising:
a plurality of cells, wherein the plurality of cells are stacked to form a cell assembly; and
an outer frame (1), comprising a bottom plate, a top cover (11), and an outer surrounding plate, wherein the bottom plate and the top cover (11) are respectively disposed at a bottom portion and a top portion of the outer surrounding plate, the outer surrounding plate comprises two opposite side plates (13) and two opposite end plates (12), the two end plates (12) are arranged at intervals in a length direction of the side plates (13), the two end plates (12), the two side plates (13), the bottom plate, and the top cover (11) surround and form an accommodating cavity together, the cell assembly is disposed in the accommodating cavity, and the top cover (11) is provided with heat dissipation holes (111).

2. The battery module according to claim 1, wherein one end of the cell assembly is provided with an output terminal (5), the heat dissipation holes (111) comprise first heat dissipation holes, and one end of the top cover (11) away from the output terminal (5) is provided with the first heat dissipation holes.

3. The battery module according to claim 2, wherein the heat dissipation holes (111) further comprise second heat dissipation holes and third heat dissipation holes, the second heat dissipation holes are disposed at two ends of the top cover (11), and the third heat dissipation holes are disposed at a middle portion of the top cover (11).

4. The battery module according to claim 3, wherein the first heat dissipation holes are disposed between the second heat dissipation holes and the third heat dissipation holes, and a distance between the first heat dissipation holes and the second heat dissipation holes adjacent to the first heat dissipation holes is less than a distance between the first heat dissipation holes and the third heat dissipation holes.

5. The battery module according to claim 1, wherein a number of the heat dissipation holes (111) is multiple, at least part of the heat dissipation holes (111) are elongated holes, and a length direction of the heat dissipation holes (111) that are elongated holes is consistent with a length direction of the cells.

6. The battery module according to claim 2, further comprising a sealing and fireproof pad (2), wherein the sealing and fireproof pad (2) is disposed between the cell assembly and the end plate (12).

7. The battery module according to claim 6, wherein the sealing and fireproof pad (2) adjacent to the output terminal (5) is provided with an output terminal accommodating hole (3), and
the sealing and fireproof pad (2) away from the output terminal (5) is provided with a low-voltage connection hole.

8. The battery module according to claim 1, further comprising a tab bracket (4) and a busbar, wherein both the tab bracket (4) and the busbar are disposed between the cell assembly and the one of the two end plates (12), and the tab bracket (4) is disposed between the cell assembly and the busbar.

9. The battery module according to any one of claims 1 to 8, wherein the heat dissipation holes (111) are not provided on the two end plates (12).

10. The battery module according to claim 1, wherein
an inner side wall of each of the two side plates (13) is provided with a discharge channel, and each of the two end plates (12) is provided with an end discharge hole (121).

11. The battery module according to claim 10, further comprising a tab bracket (4), the tab bracket (4) is located in the accommodating cavity and between one of the two end plates (12) and the cell assembly, tabs of the cells protrude from the tab bracket (4), the tab bracket (4) is provided with a plurality of bracket discharge holes (41), and the bracket discharge holes (41) are provided in one-to-one correspondence with the end discharge holes (121).

12. The battery module according to claim 11, further comprising a sealing and fireproof pad (2), the sealing and fireproof pad (2) is disposed between the tab bracket (4) and one of the two end plates (12).

13. The battery module according to claim 12, wherein the sealing and fireproof pad (2) is provided with fireproof pad discharge holes (21), and the fireproof pad discharge holes (21) are provided in one-to-one correspondence with the end discharge holes (121).

14. The battery module according to claim 12, further comprising a busbar, one end of the cell assembly is provided with two output terminals (5), the two output terminals (5) are disposed at a same end of the cell assembly, the two output terminals (5) are connected to the busbar, and the busbar is disposed between tab bracket (4) and the sealing and fireproof pad (2).

15. The battery module according to claim 10, wherein the heat dissipation holes (111) comprise second heat dissipation holes disposed at two ends of the top cover (11).

16. The battery module according to claim 15, wherein the heat dissipation holes (111) further comprise first heat dissipation holes disposed at one end of the top cover (11) away from the output terminal (5).

17. The battery module according to claim 16, wherein the heat dissipation holes (111) further comprise third heat dissipation holes disposed at a middle portion of the top cover (11), and the first heat dissipation holes are located between the third heat dissipation holes and the second heat dissipation holes.

18. The battery module according to any one of claims 10 to 17, wherein a number of the heat dissipation holes (111) is multiple, at least part of the heat dissipation holes (111) are elongated holes, and a length of each of the heat dissipation holes (111) that are elongated holes extends in a length direction of the cells.

19. A battery pack, comprising the battery module according to any one of claims 1 to 18.
